# EUROPEAN PATENT SPECIFICATION

(11) **EP 4 136 202 B1**
(45) Date of publication and mention of the grant of the patent: **26.06.2024**
(21) Application number: 21717079.4
(22) Date of filing: 07.04.2021
(51) Int. Cl.: C10M 137/12

(54) **A PHOSPHONIUM-BASED IONIC LIQUID AND ITS USE AS A LUBRICANT ADDITIVE**
PHOSPHONIUMBASIERTE IONISCHE FLÜSSIGKEIT UND DEREN VERWENDUNG ALS SCHMIERSTOFFADDITIV
LIQUIDE IONIQUE À BASE DE PHOSPHONIUM ET SON UTILISATION COMME ADDITIF POUR LUBRIFIANT

(30) Priority: 16.04.2020 EP 20315182
(43) Date of publication of application: 22.02.2023
(73) Proprietor: TOTALENERGIES ONETECH, 92400 Courbevoie (FR)
(72) Inventor: DE FEO, Modestino, 69360 Solaize (FR); PICHON, Vanessa, 69360 Solaize (FR); SCHUBERT, Thomas, 74206 Bad Wimpfen (DE); ILIEV, Boyan, 74081 Heilbronn (DE)
(74) Representative: Pact-IP
(86) International application number: PCT/EP2021/059088
(87) International publication number: WO 2021/209297

(56) References cited:
- US-A1- 2010 227 785
- US-A1- 2016 024 421
- KIKI A. KURNIA ET AL: "Hydrogen-bond acidity of ionic liquids: an extended scale", PHYSICAL CHEMISTRY CHEMICAL PHYSICS, vol. 17, no. 29, 1 January 2015 (2015-01-01), pages 18980-18990, XP055726976, ISSN: 1463-9076, DOI: 10.1039/C5CP03094C

## Description

### Field of the Invention

The invention relates to a phosphonium-based ionic liquid. In particular, the invention relates to a phosphonium-based ionic liquid that can be used as lubricant additive in a lubricant composition, in particular for marine engines. It also relates to a lubricant composition comprising said phosphonium-based ionic liquid.

### Background of the Invention

One of the primary functions of lubricants is to decrease friction. Frequently, however, lubricating oils need additional properties to be used effectively. For example, lubricants used in large diesel engines, such as, for example, marine diesel engines, are often subjected to operating conditions requiring special considerations.

The marine oils used in low-speed two-stroke crosshead engines are of two types. On the one hand, cylinder oils ensuring the lubrication of the cylinder-piston assembly and, on the other hand, system oils ensuring the lubrication of all the moving parts apart from the cylinder-piston assembly. Within the cylinder-piston assembly, the combustion residues containing acid gases are in contact with the lubricating oil.

The acid gases are formed from the combustion of the fuel oils; these are in particular sulphur oxides (SO₂, SO₃), which are then hydrolyzed in contact with the moisture present in the combustion gases and/or in the oil. This hydrolysis generates sulphurous (HSO₃) or sulphuric (H₂SO₄) acid. These acids tend to condense in the engine, so it can corrode the metal or wipe out major parts such as joints or lining parts.

To protect the surface of piston liners and avoid excessive corrosive wear, these acids must be neutralized, which is generally done by reaction with the basic sites included in the lubricant.

An oil's neutralization capacity is measured by its BN or Base Number, characterized by its basicity. It is measured according to standard ASTM D-2896 and is expressed as an equivalent in milligrams of potash per gram of oil (also called "mg of KOH/g" or "BN point"). The BN is a standard criterion making it possible to adjust the basicity of the cylinder oils to the sulphur content of the fuel oil used, in order to be able to neutralize all of the sulphur contained in the fuel, and capable of being converted to sulphuric acid by combustion and hydrolysis.

Thus, the higher the sulphur content of a fuel oil, the higher the BN of a marine oil needs to be. This is why marine oils with a BN varying from 5 to 140 mg KOH/g are found on the market.

This basicity is generally provided by detergents that are neutral and/or overbased by insoluble metallic salts, in particular metallic carbonates. The detergents, mainly of anionic type, are for example metallic soaps of salicylate, phenate, sulphonate, carboxylate type etc, which form micelles where the particles of insoluble metallic salts are maintained in suspension. The usual neutral detergents intrinsically have a BN typically less than 150 mg KOH per gram of detergent and the usual overbased detergents intrinsically have a BN in a standard fashion comprised between 150 and 700 mg KOH per gram of detergent. Their percentage by mass in the lubricant is fixed as a function of the desired BN level.

Currently, in the presence of fuel oils with a high sulphur content (3.5% w/w and less), marine lubricants having a BN from 70 to 140 are used. In the presence of fuel oils with a low sulphur content (0.5% w/w), marine lubricants having a BN from 10 to 70 are used. In these two cases, a sufficient neutralizing capacity is achieved as the necessary concentration in basic sites provided by the neutral and/or the overbased detergents of the marine lubricant is reached.

There is a need for a marine detergent, which is able to be used in presence of high-sulphur fuels and also low-sulphur fuels and having a good neutralization capacity of sulfuric acid while maintaining a good thermal resistance and thus a lower risk of deposits formation in the hot section of the engine.

There is also a need for a marine detergent, which is able to be used in presence of high-sulphur fuels and also low-sulphur fuels and having good anti-corrosion properties.

There is a need for a marine detergent, which is able to be used in presence of high-sulphur fuels and also low-sulphur fuels, respectively having a BN from 70 to 140 and having a BN from 10 to 70, and having a good neutralization capacity of sulfuric acid while maintaining a good thermal resistance and thus a lower risk of deposits formation in the hot section of the engine.

There is a need for a marine detergent, which is able to be used in presence of high-sulphur fuels and also low-sulphur fuels, respectively having a BN from 70 to 140 and having a BN from 10 to 70, and having good anti-corrosion properties.

There is also a need for marine lubricants having improved detergency properties: the capacity to keep the engine clean by limiting deposits ("keep-clean" effect) or by reducing the deposits already present in the internal parts of the combustion engine ("clean-up" effect).

An object of the present invention is to provide a lubricant additive overcoming all or part of the aforementioned drawbacks. Another object of the present invention is to provide a lubricant additive whose formulation within lubricant compositions is easy to implement.

Another object of the present invention is to provide a method for lubricating a marine engine, and especially for lubricating a two-stroke marine engine and which can be used with both low-sulphur fuel and high-sulphur fuel.

Another object of the present invention is to provide a method for lubricating a marine engine, and especially for a two-stroke marine engine used with very low-sulphur fuel.

Another object of the present invention is to provide a method for reducing the formation of deposits in the hot section of a marine engine, notably of a two-stroke marine engine.

Document EP 2403930 discloses a composition of an oil-soluble ionic detergent comprising a quaternary non-metallic pnictogen cation and an organic anion having at least one hydrocarbyl group of sufficient length to impart oil solubility to the detergent. The detergent has a total base number (TBN) to total acid number (TAN) ratio of at least 2:1 imparts ash-free basicity to a lubricant composition.

WO 2008/075016 discloses ionic liquids, wherein the cation is a quaternary phosphonium or quaternary ammonium cation, and the anion is selected from phosphinates, sulfosuccinates and carboxylates. The ionic liquids according to this disclosure may be used as an anti-wear or friction modifier additives in a lubricating oil composition.

US 2010/227784 discloses a lubricant composition comprising an ionic liquid selected from pyridinium-, ammonium-, phosphonium-, sulphonium- and imidazolium-based ionic liquids.

Kiki A. Kurnia et al. (Phys. Chem. Chem. Phys, 2015, 17, 18980) discloses ionic liquids for use as replacement of volatile organic compounds for the chemical industry processes. The ionic liquids can be selected from pyridinium-, ammonium-, phosphonium-, sulphonium- and imidazolium-based ionic liquids wherein the anion is bis(trifluoromethylsulfonyl)imide.

US 2016/0024421 discloses an ionic liquid composition based on a phosphonium cation and a carboxylate anion as an anti-wear additive in lubricating oils, such as engine and motor oils.

Surprisingly, the applicant has found that phosphonium-based ionic liquids of formula (I) as defined hereunder have noteworthy properties as detergent additives in lubricant compositions for marine engines, particularly for two-stroke marine engines. The phosphonium-based ionic liquids used according to the invention in these lubricant compositions can keep the engine clean, in particular by limiting or preventing the formation of deposits ("keep-clean" effect) or by reducing the deposits already present in the internal parts of the combustion engine ("clean-up" effect).

The applicant also discovered that phosphonium-based ionic liquids of formula (I) described hereunder have noteworthy properties as anti-corrosive additives in lubricant composition for marine engines, particularly for two-stroke marine engines.

### Summary of the Invention

The invention is directed to a phosphonium-based ionic liquid compound of formula (I)

[CAT⁺][X⁻] (I)

wherein
[CAT⁺] is selected from cations of formula (IA): 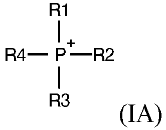 wherein:
   - R1, R2, R3 and R4 are linear or branched, saturated or unsaturated hydrocarbyl groups comprising from 1 to 12 carbon atoms,
   - at least one of R1, R2, R3, R4 is selected from a C1-C3 linear or branched alkyl or alkenyl group, and
   - at least two of R1, R2, R3, R4 are independently selected from C8-C12 linear or branched alkyl or alkenyl groups; and
[X⁻] represents a counterion selected from compounds of formula (IB): 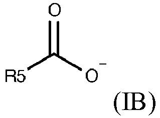
wherein R5 is selected from linear or branched alkyl and alkenyl groups comprising from 5 to 7 atoms of carbon.

Advantageously, in formula (IA),
- R1 is selected from a C1-C3 linear or branched alkyl or alkenyl group, preferably alkyl group, and
- R2, R3, R4 are independently selected from C8-C12 linear or branched alkyl or alkenyl groups, preferably alkyl groups.

More advantageously, in formula (IA), R1 = -CH₃, and R2 = R3 = R4 = CH₃-(CH₂)ₚ-, with p = 6-8.

According to a favourite embodiment, [X⁻] represents 2-ethylhexanoate.

According to a more favourite embodiment, [CAT⁺] is tri-n-octyl methylphosphonium and [X⁻] is 2-ethylhexanoate.

The invention is also directed to a lubricant composition comprising:
- from 30.0 to 99.95 % of at least one base oil,
- from 0.05 to 15.0 % of at least one phosphonium-based ionic liquid as defined above,
the percentages being defined by weight of component as compared to the total weight of the composition.

According to a favourite embodiment, the lubricant composition comprises at least one detergent selected from neutral and overbased detergents, other than the ionic liquid, having a Total Base Number according to ASTM D2896 of from 20 to 450 mg KOH/g.

Advantageously, the lubricant composition comprises from 1 to 35% by weight of neutral and overbased detergents, other than the ionic liquid, with regards to the total weight of the lubricant composition.

According to another favourite embodiment, the percentage by weight of the phosphonium-based ionic liquid as described above relative to the total weight of lubricant composition is chosen such that the BN provided by the phosphonium-based ionic liquid represents at least 3% of the total BN of said lubricant composition.

According to another favourite embodiment, the lubricant composition has a Total Base Number (TBN) value according to ASTM D2896 of above 5 mg KOH/g.

According to another favourite embodiment, the lubricant composition has a kinematic viscosity at 100°C superior or equal to 5.6 mm²/s and inferior or equal to 21.9 mm²/s.

The invention is also directed to the use of the phosphonium-based ionic liquid as defined above as detergent in a lubricant composition, notably a marine lubricant, to reduce and/or limit and/or prevent and/or delay the formation of deposits or to reduce the deposits already present in the internal parts of a combustion engine, notably a marine engine.

The invention is also directed to the use of the phosphonium-based ionic liquid as defined above as anti-corrosion additive in a lubricant composition, notably a marine lubricant, to reduce and/or eliminate and or delay the corrosion in the internal parts of a combustion engine, notably a marine engine.

The invention is also directed to a method for lubricating a two-stroke marine engine and four-stroke marine engines, preferably two-stroke marine engine, said method comprising application to said marine engine the phosphonium-based ionic liquid as defined above or the lubricant composition as described above.

The invention is also directed to a method to reduce and/or limit and/or prevent and/or delay the formation of deposits and/or to reduce the deposits already present in the internal parts of a combustion engine, notably a marine engine, wherein said method comprises at least a step of application to said engine of the phosphonium-based ionic liquid as defined above or the lubricant composition as described above.

The phosphonium-based ionic liquid of formula (I) defined above and hereunder greatly improves the detergency properties of a lubricant composition and makes it possible to reduce/eliminate/delay the corrosion of the internal parts of a marine engine.

### Detailed Description of the Invention

The term "consists essentially of" followed by one or more characteristics, means that may be included in the process or the material of the invention, besides explicitly listed components or steps, components or steps that do not materially affect the properties and characteristics of the invention.

The expression "comprised between X and Y" includes boundaries, unless explicitly stated otherwise. This expression means that the target range includes the X and Y values, and all values from X to Y.

A "ionic liquid" is a salt in the liquid state with organic or inorganic cations and anions. Generally ionic liquids have a melting point below 100°C.

"Alkyl" means a saturated hydrocarbyl chain, that can be linear, branched or cyclic.

"Alkenyl" means a hydrocarbyl chain, that can be linear, branched or cyclic and comprises at least one unsaturation, preferably a carbon-carbon double bond.

"Aryl" means an aromatic hydrocarbyl functional group. This functional group can be monocyclic or polycyclic. As examples of an aryl group one can mention: phenyl, naphtalen, anthracen, phenanthren and tetracen.

"Aralkyl" means a hydrocarbyl radical comprising an aromatic hydrocarbon functional group, preferably monocyclic, linked to an alkyl chain, the aralkyl group can be linked to the rest of the molecule through the aryl or the alkyl part of the radical.

"Hydrocarbyl" means a compound or fragment of a compound selected from: an alkyl, an alkenyl, an aryl, an aralkyl. Where indicated, some hydrocarbyl groups include heteroatoms.

### The phosphonium-based ionic liquid

Ionic liquids are organic salts composed of organic cations and either organic or inorganic anions. The cation and anion can be varied to obtain an ionic liquid with the desired properties. According to the invention, the phosphonium-based ionic liquid, is a salt of a phosphonium cation with an organic anion.

The phosphonium-based ionic liquid is advantageously selected from compounds of formula (I):

[CAT+] [X⁻] (I)

wherein
[CAT⁺] represents a phosphonium cation, [X⁻] represents one or more anionic species.

More preferably, [CAT⁺] is selected from cations of formula (IA): 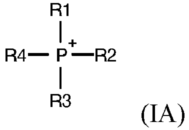 wherein:
- R1, R2, R3 and R4 are linear or branched, saturated or unsaturated hydrocarbyl groups comprising from 1 to 12 carbon atoms,
- at least one of R1, R2, R3, R4 is selected from a C1-C3 linear or branched alkyl or alkenyl group, and
- at least two of R1, R2, R3, R4 are independently selected from C8-C12 linear or branched alkyl or alkenyl groups.

Advantageously, [CAT⁺] is selected from cations of formula (IA) wherein
- R1, is selected from a C1-C3 linear or branched alkyl or alkenyl group, preferably alkyl group, and
- R2, R3, R4 are independently selected from C8-C12 linear or branched alkyl or alkenyl groups, preferably alkyl groups.

More advantageously, [CAT⁺] is selected from cations of formula (IA) wherein
- R1 represents a C1-C3 linear or branched alkyl group, and
- R2, R3, R4 are identical and represent a C8-C12 linear or branched alkyl group.

Even more advantageously, in formula (IA):
- R1 = -CH₃; and
- R2 = R3 = R4 = CH₃-(CH₂)ₚ-, with p = 6-8.

According to a favourite embodiment, R1 = -CH₃, and R2 = R3 = R4 = CH₃-(CH₂)₇-.

In accordance with the present invention, [X⁻] represents a counterion selected from carboxylates of formula (IB): 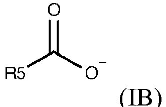 wherein R5 is selected from linear or branched alkyl and alkenyl groups comprising from 5 to 7 atoms of carbon.

According to a favourite embodiment, [X⁻] represents 2-ethylhexanoate.

According to a favourite embodiment, the phosphonium-based ionic liquid is tri n-octyl methylphosphonium 2-ethylhexanoate:

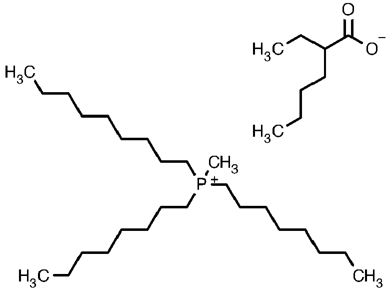

The molecules of formula (I) can be prepared by any method known to the skilled professional, as illustrated for example in M. G. Bogdanov et al., Z. Naturforsch. 2010, 65b, 37 - 48; Y. Gao et al., Inorg. Chem. 2005, 44, 1704-1712. An example synthesis is disclosed in the experimental part.

In order to be used in a lubricant composition, the phosphonium-based ionic liquid of formula (I) must preferably be soluble in a base oil which represents the major part of the lubricant composition. A compound is oil-soluble when it can be solubilized at a concentration of at least 0.01 % by weight with regards to the weight of a base oil, at room temperature.

In order to check that the phosphonium-based ionic liquid is oil-soluble, a test is disclosed in the experimental part.

Advantageously, the percentage by weight of phosphonium-based ionic liquid of formula (I) relative to the total weight of lubricant composition is chosen such that the BN provided by these compounds represents a contribution of at least 0.5 milligrams of potash per gram of lubricant, preferably at least 2 milligrams of potash per gram, more preferably at least 3 milligrams of potash per gram, still more preferably from 3 to 40 milligrams of potash per gram of lubricant, to the total BN of said lubricant composition.

Advantageously, the percentage by weight of phosphonium-based ionic liquid of formula (I) relative to the total weight of lubricant composition is chosen such that the BN provided by the phosphonium-based ionic liquid represents at least 3%, preferably at least 5%, preferably from 10 to 50% of the total BN of said lubricant composition.

In a preferred embodiment of the invention, the weight percentage of phosphonium-based ionic liquid of formula (I) relative to the total weight of the lubricant composition ranges from 0.05 to 15%, preferably from 0.1 to 12%, advantageously from 0.5 to 10%, even more preferably from 1 to 8%.

### Lubricant composition

The invention is also directed to the use of the phosphonium-based ionic liquid of formula (I) that has been disclosed above as an additive in lubricating oil (or lubricant) compositions.

The invention is further directed to lubricant compositions for two stroke and four stroke marine engines comprising such additive.

Advantageously, the lubricant composition comprises, preferably consists essentially of:
- from 30.0 to 99.95 % of at least one base oil,
- from 0.05 to 15.0 % of at least one phosphonium-based ionic liquid of formula (I) as defined above
the percentages being defined by weight of component as compared to the total weight of the composition.

Even more advantageously, the lubricant composition comprises, preferably consists essentially of:
- from 50.0 to 99.0 % of at least one base oil
- from 1.0 to 10.0 % of at least one phosphonium-based ionic liquid of formula (I) as defined above,
the percentages being defined by weight of component as compared to the total weight of the composition.

According to another favourite embodiment, the invention is directed to a lubricant composition comprising, preferably consisting essentially of:
- at least one base oil,
- at least one phosphonium-based ionic liquid of formula (I) as defined above,
- at least one detergent selected from neutral and overbased detergents having a Total Base Number according to ASTM D2896 of from 20 to 450 mg KOH/g.

Advantageously, according to this embodiment, the lubricant composition comprises, preferably consists essentially of:
- from 30.0 to 94.0 % of at least one base oil,
- from 0.05 to 15 % of at least one phosphonium-based ionic liquid of formula (I) as defined above,
- from 1 to 35 % of at least one detergent selected from neutral and overbased detergents having a Total Base Number according to ASTM D2896 of from 20 to 450 mg KOH/g
the percentages being defined by weight of component as compared to the total weight of the composition.

Advantageously, the lubricant composition comprises, preferably consists essentially of:
- from 50 to 90 % of at least one base oil,
- from 1 to 10 % of at least one phosphonium-based ionic liquid of formula (I) as defined above,
- from 5 to 35 % at least one detergent selected from neutral and overbased detergents having a Total Base Number according to ASTM D2896 of from 20 to 450,
the percentages being defined by weight of component as compared to the total weight of the composition.

### Base oils

Generally, the lubricating oil compositions according to the invention comprise as a first component an oil of lubricating viscosity, also called "base oils". The base oil for use herein can be any presently known or later-discovered oil of lubricating viscosity used in formulating lubricating oil compositions for any of the following applications, e.g., engine oils, marine cylinder oils, functional fluids such as hydraulic oils, gear oils, transmission fluids, like for example automatic transmission fluids, turbine lubricants, trunk piston engine oils, compressor lubricants, metal-working lubricants, and other lubricating oil and grease compositions.

Advantageously, the lubricant compositions according to the invention are marine engine lubricating oil compositions, preferably they are 2-stroke marine engine lubricating oil compositions.

Generally, the oils also called "base oils" used for formulating lubricant compositions according to the present invention may be oils of mineral, synthetic or plant origin as well as their mixtures. The mineral or synthetic oils generally used in the application belong to one of the classes defined in the API classification as summarized below:

| | Saturated substance content (weight percent) | Sulfur content (weight percent) | Viscosity Index |
|---|---|---|---|
| Group 1 Mineral oils | <90% | >0.03% | 80 ≦ VI < 120 |
| Group 2 Hydrocracked oils | 190% | 10.03% | 80 ≦ VI < 120 |
| Group 3 Hydroisomerized oils | 190% | 10.03% | ≧ 120 |
| Group 4 | PAOs | | |
| Group 5 | Other bases not included in the base Groups 1 to 4 | | |

These mineral oils of Group 1 may be obtained by distillation of selected naphthenic or paraffinic crude oils followed by purification of these distillates by methods such as solvent extraction, solvent or catalytic dewaxing, hydrotreating or hydrogenation.

The oils of Groups 2 and 3 are obtained by more severe purification methods, for example a combination of hydrotreating, hydrocracking, hydrogenation and catalytic dewaxing. Examples of synthetic bases of Groups 4 and 5 include poly-alpha olefins, polybutenes, polyisobutenes, alkylbenzenes.

These base oils may be used alone or as a mixture. A mineral oil may be combined with a synthetic oil.

The lubricant compositions of the invention have a viscosity grade of SAE-20, SAE-30, SAE-40, SAE-50 or SAE-60 according to the SAEJ300 classification.

Grade 20 oils have a kinematic viscosity at 100° C of between 5.6 and 9.3 mm²/s.

Grade 30 oils have a kinematic viscosity at 100° C of between 9.3 and 12.5 mm²/s.

Grade 40 oils have a kinematic viscosity at 100° C of between 12.5 and 16.3 mm²/s.

Grade 50 oils have a kinematic viscosity at 100° C of between 16.3 and 21.9 mm²/s.

Grade 60 oils have a kinematic viscosity at 100° C of between 21.9 and 26.1 mm²/s.

Preferably, the lubricant composition is a cylinder lubricant.

Advantageously, the quantity of base oil in the lubricant composition of the invention is from 30% to 99.95% by weight relative to the total weight of the lubricant composition, preferably from 40% to 99%, more preferably from 50% to 94%.

### Detergents

The phosphonium-based ionic liquids as above defined play the role of detergent in the lubricant composition. They have the advantage of permitting the use of lower amounts of metal detergents. Therefore, the ionic liquids used according to the invention give access to compositions which have the capacity to neutralize low-sulfur fuel compositions and high-sulfur fuel compositions, but in both cases, they avoid the formation of deposits. According to the invention, ionic liquids are preferentially used in combination with at least one detergent that does not belong to the class of ionic liquids, preferably at least one metal detergent.

Detergents, other than the phosphonium-based ionic liquids, are typically anionic compounds containing a long lipophilic hydrocarbon chain and a hydrophilic head, wherein the associated cation is typically a metal cation of an alkali metal or alkaline earth metal. The detergents are preferably selected from alkali metal salts or alkaline earth metal (particularly preferably calcium, magnesium, sodium or barium) salts of carboxylic acids, sulphonates, salicylates, naphthenates, as well as the salts of phenates. These metal salts may contain the metal in an approximately stoichiometric amount relative to the anion group(s) of the detergent. In this case, one refers to non-overbased or "neutral" detergents, although they also contribute to a certain basicity. These "neutral" detergents typically have a BN measured according to ASTM D2896, of less than 150 mg KOH/g, or less than 100 mg KOH/g, or less than 80 mg KOH/g of detergent. This type of so-called neutral detergent may contribute in part to the BN of lubricating compositions. For example, neutral detergents are used such as carboxylates, sulphonates, salicylates, phenates, naphthenates of the alkali and alkaline earth metals, for example calcium, sodium, magnesium, barium. When the metal is in excess (amount greater than the stoichiometric amount relative to the anion groups(s) of the detergent), then these are so-called overbased detergents. Their BN is high, higher than 150 mg KOH/g of detergent, typically from 200 to 700 mg KOH/g of detergent, preferably from 250 to 450 mg KOH/g of detergent. The metal in excess providing the character of an overbased detergent is in the form of insoluble metal salts in oil, for example carbonate, hydroxide, oxalate, acetate, glutamate, preferably carbonate. In one overbased detergent, the metals of these insoluble salts may be the same as, or different from, those of the oil soluble detergents. They are preferably selected from calcium, magnesium, sodium or barium. The overbased detergents are thus in the form of micelles composed of insoluble metal salts that are maintained in suspension in the lubricating composition by the detergents in the form of soluble metal salts in the oil. These micelles may contain one or more types of insoluble metal salts, stabilised by one or more types of detergent. The overbased detergents comprising a single type of detergent-soluble metal salt are generally named according to the nature of the hydrophobic chain of the latter detergent. Thus, they will be called a phenate, salicylate, sulphonate, naphthenate type when the detergent is respectively a phenate, salicylate, sulphonate or naphthenate. The overbased detergents are called mixed type if the micelles comprise several types of detergents, which are different from one another by the nature of their hydrophobic chain. The overbased detergent and the neutral detergent may be selected from carboxylates, sulphonates, salicylates, naphthenates, phenates and mixed detergents combining at least two of these types of detergents. The overbased detergent and the neutral detergent include compounds based on metals selected from calcium, magnesium, sodium or barium, preferably calcium or magnesium. The overbased detergent may be overbased by metal insoluble salts selected from the group of carbonates of alkali and alkaline earth metals, preferably calcium carbonate. The lubricating composition may comprise at least one overbased detergent and at least a neutral detergent as defined above.

Advantageously, the composition according to the invention comprises from 1 to 35% weight detergent, more advantageously from 5 to 35%, preferably from 8 to 35%, and even more preferably from 10 to 35%, these percentages being by weight of detergent, other than the ionic liquid, with regards to the total weight of the lubricant composition.

Preferably the composition according to the invention comprises from 1 to 35% weight detergent, more advantageously from 5 to 35%, preferably from 8 to 35%, and even more preferably from 10 to 35%, these percentages being by weight of neutral and overbased detergent, with regards to the total weight of the lubricant composition, preferably selected from neutral and overbased detergents having a Total Base Number according to ASTM D2896 of from 20 to 450 mg KOH/g.

Advantageously, the percentage by weight of neutral and overbased detergents relative to the total weight of lubricant is chosen such that the BN provided by the neutral and overbased detergents represents a contribution of at most 70 milligrams of potash per gram of lubricant, preferably from 5 to 70 milligrams of potash per gram of lubricant, more preferably from 20 to 40 milligrams of potash per gram of lubricant, to the total BN of said cylinder lubricant.

### Additives:

It is optionally possible to substitute the above-described base oils in full or in part by one or more thickening additives whose role is to increase both the hot and cold viscosity of the composition, or by additives improving the viscosity index (VI).

The lubricant composition of the invention may comprise at least one optional additive, chosen in particular from among those frequently used by persons skilled in the art.

In one embodiment, the lubricant composition further comprises an optional additive chosen amongst an anti-wear additive, an oil soluble fatty amine, a polymer, a dispersing additive, an anti-foaming additive or a mixture thereof.

Polymers are typically polymers having a low molecular weight of from 2000 to 50 000 Dalton (Mₙ). The polymers are selected amongst PIB (of from 2000 Dalton), polyacrylates or polymetacrylates (of from 30 000 Dalton), olefin copolymers, olefin and alpha-olefin copolymers, EPDM, polybutenes, poly alpha-olefin having a high molecular weight (viscosity 100°C>150), hydrogenated or non-hydrogenated styrene-olefin copolymers.

Anti-wear additives protect the surfaces from friction by forming a protective film adsorbed on these surfaces. The most commonly used is zinc dithiophosphate or ZnDTP. Also in this category, there are various phosphorus, sulphur, nitrogen, chlorine and boron compounds. There are a wide variety of anti-wear additives, but the most widely used category is that of the sulphur phospho additives such as metal alkylthiophosphates, especially zinc alkylthiophosphates, more specifically, zinc dialkyl dithiophosphates or ZnDTP. The preferred compounds are those of the formula Zn((SP(S)(OR₁)(OR₂))₂, wherein R₁ and R₂ are alkyl groups, preferably having 1 to 18 carbon atoms. The ZnDTP is typically present at levels of about 0.1 to 2% by weight relative to the total weight of the lubricating composition. The amine phosphates, polysulphides, including sulphurised olefins, are also widely used anti-wear additives. One also optionally finds nitrogen and sulphur type anti-wear and extreme pressure additives in lubricating compositions, such as, for example, metal dithiocarbamates, particularly molybdenum dithiocarbamate. Glycerol esters are also anti-wear additives. Mention may be made of mono-, di- and trioleates, monopalmitates and monomyristates. In one embodiment, the content of anti-wear additives ranges from 0.01 to 6%, preferably from 0.1 to 4% by weight relative to the total weight of the lubricating composition.

Dispersants are well known additives used in the formulation of lubricating compositions, in particular for application in the marine field. Their primary role is to maintain in suspension the particles that are initially present or appear in the lubricant during its use in the engine. They prevent their agglomeration by playing on steric hindrance. They may also have a synergistic effect on neutralisation. Dispersants used as lubricant additives typically contain a polar group, associated with a relatively long hydrocarbon chain, generally containing 50 to 400 carbon atoms. The polar group typically contains at least one nitrogen, oxygen, or phosphorus element. Compounds derived from succinic acid are particularly useful as dispersants in lubricating additives. Also used are, in particular, succinimides obtained by condensation of succinic anhydrides and amines, succinic esters obtained by condensation of succinic anhydrides and alcohols or polyols. These compounds can then be treated with various compounds including sulphur, oxygen, formaldehyde, carboxylic acids and boron-containing compounds or zinc in order to produce, for example, borated succinimides or zinc-blocked succinimides. Mannich bases, obtained by polycondensation of phenols substituted with alkyl groups, formaldehyde and primary or secondary amines, are also compounds that are used as dispersants in lubricants. In one embodiment of the invention, the dispersant content may be greater than or equal to 0.1%, preferably 0.5 to 2%, advantageously from 1 to 1.5% by weight relative to the total weight of the lubricating composition. It is possible to use a dispersant from the PIB succinimide family, e.g. boronated or zinc-blocked.

Other optional additives may be chosen from defoamers, for example, polar polymers such as polydimethylsiloxanes, polyacrylates. They may also be chosen from antioxidant and/or anti-rust additives, for example organometallic detergents or thiadiazoles. These additives are known to persons skilled in the art. These additives are generally present in a weight content of 0.01 to 5% based on the total weight of the lubricating composition.

In one embodiment, the lubricant composition according to the invention may further comprise an oil soluble fatty amine.

The optional additives such as defined above contained in the lubricant compositions of the present invention can be incorporated in the lubricant composition as separate additives, in particular through separate addition thereof in the base oils. However, they may also be integrated in a concentrate of additives for marine lubricant compositions.

### Method for producing a lubricant composition

The present disclosure provides a method for producing a lubricant composition, notably a marine lubricant, as above disclosed, comprising the step of mixing the base oil with the phosphonium-based ionic liquid component as above defined, and optionally the additives.

### Properties of the lubricant composition

The components that have been above disclosed are formulated to provide a composition that advantageously has the following characteristics:
Advantageously, the composition has a Total Base Number (TBN) value according to ASTM D2896 of above 5 mg KOH/g. Preferably, the composition has a Total Base Number (TBN) value of from 10 to 140 mg KOH/g, better from 15 to 75 mg KOH/g, more preferably from 20 to 60 mg KOH/g.

Preferably, the lubricant composition according to the invention has a kinematic viscosity at 100°C superior or equal to 5.6 mm²/s and inferior or equal to 21.9 mm²/s, preferably superior or equal to 12.5 mm²/s and inferior or equal to 21.9 mm²/s, more preferably superior or equal to 14.3 mm²/s and inferior or equal to 21.9 mm²/s, advantageously comprised between 16.3 and 21.9 mm²/s, wherein kinematic viscosity at 100°C is evaluated according to ASTM D 445.

Preferably, the lubricant composition according to the invention is a cylinder lubricant.

Even more advantageously, the lubricating composition is a cylinder oil for two-stroke diesel marine engines and has a viscosimetric grade SAE-50, equivalent to a kinematic viscosity at 100° C comprised between 16.3 and 21.9 mm²/s.

Typically, a conventional formulation of cylinder lubricant for two-stroke marine diesel engines is of grade SAE 40 to SAE 60, preferentially SAE 50 (according to the SAE J300 classification) and comprises at least 50% by weight of a lubricating base oil of mineral and/or synthetic origin, adapted to the use in a marine engine, for example of the API Group 1 class.

These viscosities may be obtained by mixing additives and base oils, for example base oils containing mineral bases of Group 1 such as Neutral Solvent (for example 150 NS, 500 NS or 600 NS) bases and bright stock. Any other combination of mineral, synthetic bases or bases of plant origin, having, as a mixture with the additives, a viscosity compatible with the chosen SAE grade, may be used.

The Applicant found that it was possible to formulate cylinder lubricants in which a significant part of the BN is provided by oil-soluble phosphonium-based ionic liquid whilst maintaining the level of performance compared with standard formulations with an equivalent BN.

The performances in question here are in particular the capacity to neutralize sulphuric acid, measured using the enthalpy test described in the examples hereafter.

Thanks to the alternative BN provided by the oil-soluble phosphonium-based ionic liquid, which do not form hard deposits leading to wear of the parts, optionally in combination with overbased and neutral detergents, the cylinder lubricants according to the present invention are suitable for both high-sulphur fuel oils and low-sulphur fuel oils.

### Use of the phosphonium-based ionic liquid of formula (I) and of the lubricant composition comprising it

The invention also relates to the use of a phosphonium-based ionic liquid of formula (I) as defined above for lubricating engines, preferably marine engines. Specifically, the invention is directed to the use of a phosphonium-based ionic liquid of formula (I) as defined above for lubricating two-stroke marine engines and four-stroke marine engines, more preferably two-stroke marine engine.

In particular, the phosphonium-based ionic liquid of formula (I) is suitable for use in a lubricant composition, as cylinder oil or system oil, for lubricating two-stroke engines and four-stroke marine engines, more preferably two-stroke engines.

The invention particularly relates to the use of a phosphonium-based ionic liquid of the invention as detergent additive in a lubricant composition, notably a marine lubricant.

In particular, the phosphonium-based ionic liquid of formula (I) is used in a lubricant composition, notably a marine lubricant, to reduce and/or limit and/or prevent and/or delay the formation of deposits (keep clean effect) and/or to reduce the deposits already present in the internal parts of a marine engine (clean-up effect).

According to another aspect of the invention, the phosphonium-based ionic liquid of the invention is used as an anti-corrosion additive in a lubricant composition, notably a marine lubricant.

The invention also relates to the use of the above-described lubricant composition comprising the phosphonium-based ionic liquid of formula (I) and a base oil, for lubricating two-stroke engines and four-stroke marine engines, more preferably two-stroke engines.

In particular, the above-described lubricant composition is used in marine engines, preferably two-stroke marine engines, to reduce and/or limit and/or prevent and/or delay the formation of deposits (keep clean effect) and/or to reduce the deposits already present in the internal parts of said marine engine (clean-up effect).

According to another aspect of the invention, the lubricant composition of the invention is used in a marine engine, preferably a two-stroke marine engine, to reduce and/or limit and/or prevent and/or delay corrosion.

The invention also relates to a method for lubricating two-stroke marine engines and four-stroke marine engines, more preferably two-stroke marine engines, said method comprising the application to said marine engine of the phosphonium-based ionic liquid or of a lubricant composition as disclosed above.

The invention particularly relates to a method to reduce and/or limit and/or prevent and/or delay the formation of deposits and/or to reduce the deposits already present in the internal parts of a combustion engine, wherein said method comprises at least a step of application to said engine of a phosphonium-based ionic liquid or of a lubricant composition as disclosed above.

The invention also relates to a method to reduce and/or limit and/or prevent and/or delay corrosion in the internal parts of a marine engine, wherein said method comprises at least a step of application to said engine of a phosphonium-based ionic liquid or of a lubricant composition as disclosed above.

In particular, the phosphonium-based ionic liquid or the lubricant composition is applied to the cylinder wall, typically by a pulse lubricating system or by spraying the ionic liquid or the composition onto the piston's rings pack through an injector for lubricating two-stroke engines. It has been observed that applying to the cylinder wall the lubricant composition according to the invention provides increased protection against corrosion and improved engine cleanliness.

### Examples

### Materials and methods

### 2-ethylhexanoic acid (CAS 149-57-5) is available from Merck.

tri-n-octyl methylphosphonium methylcarbonate (CAS 1204316-79-9) is available from Proionic GmbH.

### I- Synthesis of tri-n-octyl methylphosphonium 2-ethylhexanoate (IL1):

576.8 g (4 mol) of 2-ethylhexanoic acid were added slowly, under stirring and over a period of 5 hours, to a 30% solution in methanol of tri-n-octylmethylphosphonium methyl carbonate (1841.6 g, 4 mol). The temperature of the reaction was kept under 25°C. CO₂ evolution was monitored. Stirring was controlled in order to avoid foaming. After completion of the addition, the reaction mixture was further stirred at room temperature for 24 hours. Then, the pH of the medium was adjusted to pH=9 through addition of either tri-n-octylmethylphosphonium methylcarbonate or 2-ethylhexanoic acid. 60 ml of activated charcoal were added to the mixture and the latter was further vigorously stirred for 13 hours at room temperature. The charcoal was filtered over a glass frit filter, then the solvent was evaporated under a reduced pressure at 38°C. The obtained slightly yellow oil was further dried at 35°C under a vacuum of 10⁻² mbar for 168 hours under vigorous stirring until the water content was below 0.1%, as measured by Karl-Fischer titration.

The base number of IL1 is 100 mg KOH/g according to ASTM D2896.

### Solubility test:

In order to check that the phosphonium-based ionic liquid is oil-soluble, the following test has been achieved:
100 mL of the lubricant composition comprising IL1 and the base oil is introduced into two reaction tubes. One of the tubes is maintained at room temperature (between 15 and 25°C) and the other reaction tube is placed in an oven at 60°C.

After three months, the lubricant composition of both reaction tubes was limpid. Thus, the phosphonium-based ionic liquid IL1 is soluble in the oil.

### II- Preparation of the lubricant composition:

Lubricant compositions are prepared by mixing at 60°C the base oil with the additives listed in Table 1 below with the corresponding proportions. The percentages correspond to weight percent with regards to the total weight of the composition.

Composition C1 is a comparative example. Composition C2 is according to the invention.

**Table 1: formulation of lubricant compositions**

| Composition | C1 | C2 |
|---|---|---|
| Base oil ⁽¹⁾ (%) | 89.67 | 87.97 |
| IL1 (%) | | 3 |
| Dtg 1 ⁽²⁾ (%) | 4.6 | 4 |
| Dtg 2 ⁽²⁾ (%) | 5.7 | 5 |
| AF ⁽³⁾ (%) | 0.03 | 0.03 |
| TBN (Total base number in mg KOH/g of composition according to ASTM D2896) | 25.1 | 25.6 |

| | | |
|---|---|---|
| ⁽¹⁾ Group I mineral oil 600NS having a viscosity at 40 ° C of 112 cSt measured according to ASTM D7279 ⁽²⁾ Detergents: Dtg1: Salicylate of TBN = 225 mg KOH/g according to ASTM D2896, Dtg 2: phenate of TBN = 260 mg KOH/g according to ASTM D2896 ⁽³⁾ AF: anti-foaming agent | | |

### III: Test method 1- Heat resistance and detergency of lubricant compositions:

The heat resistance of lubricant compositions according to the invention is evaluated by performing the ECBT test on aged oil.

Principle: the heat resistance of the lubricant composition Ci was thus evaluated by means of the ECBT test on aged oil, via which the mass of deposits (in mg) generated under given conditions is determined. The lower this mass, the better the heat resistance and thus the better the cleanliness of the engine.

This test simulates the behaviour of the lubricant composition when it is injected onto the hot parts of the engine and especially onto the top of the piston.

Equipment used: the test was performed at a temperature of 310°C. It uses aluminium beakers which simulate the form of pistons. The beakers were placed in a glass container; the lubricant composition being maintained at a controlled temperature of about 60°C. The lubricant was placed in these containers, which were themselves equipped with a metal brush partially immersed in the lubricant. This brush is driven in a rotary motion at a speed of 1000 rpm, which creates a projection of lubricant onto the inner surface of the beaker. The beaker was maintained at a temperature of 310°C by means of a heating electrical resistance, regulated by a thermocouple. This projection of lubricant was continued throughout the test for 12 hours.

This procedure makes it possible to simulate the formation of deposits in the piston-ring assembly. The result is the weight of deposits measured in mg on the beaker.

A detailed description of this test is given in the publication "Research and Development of Marine Lubricants in ELF ANTAR France- The relevance of laboratory tests in simulating field performance" by Jean-Philippe ROMAN, Marine Propulsion Conference 2000- Amsterdam- 29-30 Mar. 2000.

Results: the lubricant composition according to the invention C2 provides 189 mg of deposits whereas the comparative lubricant C1 provides 499 mg of deposits.

Thus, the phosphonium-based ionic liquid of formula (I) according to the present invention has good detergency properties since it allows reducing the deposits in pieces of a motor.

### IV: Test method 2 - anti-corrosion properties:

Equipment used: The apparatus used to evaluate the passivation of the compounds tested consists of a beaker of suitable size (usually 500 to 1000 mL), a temperature-regulating device such as a hot plate, and a specimen support system. 200 mL of lubricant are continuously mixed by a suitable stirring mechanism, such as a magnetic stirrer or others. Using a dosing syringe or pump, a well-defined amount of sulfuric acid is added to the lubricant drop by drop, to expose the metallic test samples to severely acidic corrosive conditions. The quantity of sulfuric acid is determined to have 90% of the TBN of the oil neutralized.

The effects of corrosion are determined by visual changes on the metallic specimen.

Results: The results obtained with compositions C1 and C2 described above are shown in table 3 below. Corrosion is rated on a scale of 1 to 5. 1 means that the test sample is very corroded and 5 means it is hardly corroded or not corroded at all.

**Table 3:**

| Composition | C1 | C2 |
|---|---|---|
| Corrosion observed | 1 | 5 |

## Claims

1. Phosphonium-based ionic liquid compound of formula (I)
[CAT+] [X⁻] (I)
wherein
[CAT⁺] is selected from cations of formula (IA): 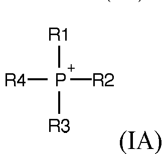 wherein:
- R1, R2, R3 and R4 are linear or branched, saturated or unsaturated hydrocarbyl groups comprising from 1 to 12 carbon atoms,
- at least one of R1, R2, R3, R4 is selected from a C1-C3 linear or branched alkyl or alkenyl group, and
- at least two of R1, R2, R3, R4 are independently selected from C8-C12 linear or branched alkyl or alkenyl groups; and
[X⁻] represents a counterion selected from compounds of formula (IB): 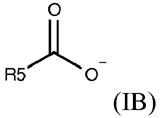 wherein R5 is selected from linear or branched alkyl and alkenyl groups comprising from 5 to 7 atoms of carbon.

2. The phosphonium-based ionic liquid according to claim 1, wherein in formula (IA)
- R1 is selected from a C1-C3 linear or branched alkyl or alkenyl group, preferably alkyl group, and
- R2, R3, R4 are independently selected from C8-C12 linear or branched alkyl or alkenyl groups, preferably alkyl groups.

3. The phosphonium-based ionic liquid according to claim 2, wherein in formula (IA) R1 = -CH₃, and R2 = R3 = R4 = CH₃-(CH₂)ₚ-, with p = 6-8.

4. The phosphonium-based ionic liquid according to anyone of claims 1 to 3, wherein [X⁻] represents 2-ethylhexanoate.

5. The phosphonium-based ionic liquid according to anyone of claims 1 to 4 wherein [CAT⁺] is tri-n-octyl methylphosphonium and [X⁻] is 2-ethylhexanoate.

6. A lubricant composition comprising:
• from 30.0 to 99.95 % of at least one base oil,
• from 0.05 to 15.0 % of at least one phosphonium-based ionic liquid as defined in claims 1 to 5,
the percentages being defined by weight of component as compared to the total weight of the composition.

7. The lubricant composition of claim 6, wherein it comprises at least one detergent selected from neutral and overbased detergents, other than the ionic liquid, having a Total Base Number according to ASTM D2896 of from 20 to 450 mg KOH/g.

8. The lubricant composition of claim 7, wherein it comprises from 1 to 35% by weight of neutral and overbased detergents, other than the ionic liquid, with regards to the total weight of the lubricant composition.

9. The lubricant composition according to any one of claim 6 to claim 8, wherein the percentage by weight of phosphonium-based ionic liquid relative to the total weight of lubricant composition is chosen such that the BN provided by the phosphonium-based ionic liquid represents at least 3% of the total BN of said lubricant composition.

10. The lubricant composition according to any one of claim 6 to claim 9, which has a Total Base Number (TBN) value according to ASTM D2896 of above 5 mg KOH/g.

11. The lubricant composition according to any one of claim 6 to claim 10, which has a kinematic viscosity at 100°C superior or equal to 5.6 mm²/s and inferior or equal to 21.9 mm²/s.

12. Use of the phosphonium-based ionic liquid defined in claims 1 to 5 as detergent in a lubricant composition, notably a marine lubricant, to reduce and/or limit and/or prevent and/or delay the formation of deposits or to reduce the deposits already present in the internal parts of a combustion engine.

13. Use of the phosphonium-based ionic liquid according defined in claims 1 to 5 as anti-corrosion additive in a lubricant composition, notably a marine lubricant, to reduce and/or eliminate and or delay the corrosion in the internal parts of a combustion engine.

14. Method for lubricating a two-stroke marine engine and four-stroke marine engines, said method comprising application to said marine engine the phosphonium-based ionic liquid as defined in claims 1 to 5 or the lubricant composition as defined in claims 6 to 11.

15. Method to reduce and/or limit and/or prevent and/or delay the formation of deposits and/or to reduce the deposits already present in the internal parts of a combustion engine, wherein said method comprises at least a step of application to said engine of a phosphonium-based ionic liquid as defined in claims 1 to 5 or of a lubricant composition as defined in claims 6 to 11.

## Patentansprüche

1. Ionische flüssige Verbindung auf Phosphoniumbasis der Formel (I)
[CAT⁺][X⁻] (I)
wobei
[CAT⁺] ausgewählt ist aus Kationen der Formel (IA): 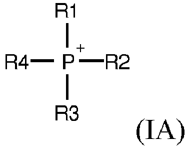 wobei:
- R1, R2, R3 und R4 lineare oder verzweigte, gesättigte oder ungesättigte Hydrocarbylgruppen umfassend von 1 bis 12 Kohlenstoffatome sind,
- wenigstens eines von R1, R2, R3 und R4 ausgewählt ist aus einer linearen oder verzweigten C1-C3-Alkyl- oder Alkenylgruppe und
- wenigstens zwei von R1, R2, R3 und R4 unabhängig ausgewählt sind aus linearen oder verzweigten C8-C12-Alkyl- oder Alkenylgruppen; und
[X⁻] ein Gegenion ausgewählt aus Verbindungen der Formel (IB) darstellt: 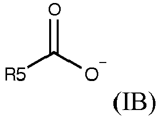 wobei R5 ausgewählt ist aus linearen oder verzweigten Alkyl- und Alkenylgruppen umfassend von 5 bis 7 Kohlenstoffatome.

2. Ionische Flüssigkeit auf Phosphoniumbasis gemäß Anspruch 1, wobei in Formel (IA)
- R1 ausgewählt ist aus einer linearen oder verzweigten C1-C3-Alkyl- oder Alkenylgruppe, vorzugsweise Alkylgruppe, und
- R2, R3 und R4 unabhängig ausgewählt sind aus linearen oder verzweigten C8-C12-Alkyl- oder Alkenylgruppen, vorzugsweise Alkylgruppen.

3. Ionische Flüssigkeit auf Phosphoniumbasis gemäß Anspruch 2, wobei in Formel (IA) R1 = -CH₃ und R2 = R3 = R4 = CH₃-(CH₂)ₚ- mit p = 6-8.

4. Ionische Flüssigkeit auf Phosphoniumbasis gemäß einem der Ansprüche 1 bis 3, wobei [X⁻] 2-Ethylhexanoat darstellt.

5. Ionische Flüssigkeit auf Phosphoniumbasis gemäß einem der Ansprüche 1 bis 4, wobei [CAT⁺] Tri-n-octylmethylphosphonium ist und [X⁻] 2-Ethylhexanoat ist.

6. Schmiermittelzusammensetzung umfassend:
• von 30,0 bis 99,95 % an wenigstens einem Grundöl,
• von 0,05 bis 15,0 % an wenigstens einer ionischen Flüssigkeit auf Phosphoniumbasis gemäß Ansprüchen 1 bis 5,
wobei die Prozentwerte als das Gewicht der Komponente gegenüber dem Gesamtgewicht der Zusammensetzung definiert sind.

7. Schmiermittelzusammensetzung gemäß Anspruch 6, die wenigstens ein Detergens ausgewählt aus neutralen und überbasischen Detergenzien, die von der ionischen Flüssigkeit verschieden sind, mit einer Gesamtbasenzahl gemäß ASTM D2896 von 20 bis 450 mg KOH/g umfasst.

8. Schmiermittelzusammensetzung gemäß Anspruch 7, die von 1 bis 35 Gew.-% an neutralen und überbasischen Detergenzien, die von der ionischen Flüssigkeit verschieden sind, bezogen auf das Gesamtgewicht der Schmiermittelzusammensetzung, umfasst.

9. Schmiermittelzusammensetzung gemäß einem von Anspruch 6 bis Anspruch 8, wobei die Gewichtsprozent an ionischer Flüssigkeit auf Phosphoniumbasis bezogen auf das Gesamtgewicht der Schmiermittelzusammensetzung so ausgewählt sind, dass die von der ionischen Flüssigkeit auf Phosphoniumbasis bereitgestellte BN wenigstens 3 % der Gesamt-BN der Schmiermittelzusammensetzung darstellt.

10. Schmiermittelzusammensetzung gemäß einem von Anspruch 6 bis Anspruch 9, die einen Wert der Gesamtbasenzahl (TBN) gemäß ASTM D2896 von über 5 mg KOH/g aufweist.

11. Schmiermittelzusammensetzung gemäß einem von Anspruch 6 bis Anspruch 10, die eine kinematische Viskosität bei 100 °C von größer als oder gleich 5,6 mm²/s und kleiner als oder gleich 21,9 mm²/s aufweist.

12. Verwendung der ionischen Flüssigkeit auf Phosphoniumbasis gemäß Ansprüchen 1 bis 5 als Detergens in einer Schmiermittelzusammensetzung, insbesondere eines Schiffsschmiermittels, zum Verringern und/oder Beschränken und/oder Verhindern und/oder Verzögern der Entstehung von Ablagerungen oder zum Verringern von bereits vorhandenen Ablagerungen in den inneren Teilen eines Verbrennungsmotors.

13. Verwendung der ionischen Flüssigkeit auf Phosphoniumbasis gemäß Ansprüchen 1 bis 5 als Antikorrosionszusatzstoff in einer Schmiermittelzusammensetzung, insbesondere eines Schiffsschmiermittels, zum Verringern und/oder Beseitigen und/oder Verzögern der Korrosion in den inneren Teilen eines Verbrennungsmotors.

14. Verfahren zum Schmieren eines Zweitakt-Schiffsmotors und von Viertakt-Schiffsmotoren, wobei das Verfahren Anwenden der ionischen Flüssigkeit auf Phosphoniumbasis gemäß Ansprüchen 1 bis 5 oder der Schmiermittelzusammensetzung gemäß Ansprüchen 6 bis 11 bei dem Schiffsmotor umfasst.

15. Verfahren zum Verringern und/oder Beschränken und/oder Verhindern und/oder Verzögern der Entstehung von Ablagerungen und/oder zum Verringern der bereits vorhandenen Ablagerungen in den inneren Teilen eines Verbrennungsmotors, wobei das Verfahren wenigstens einen Schritt der Anwendung einer ionischen Flüssigkeit auf Phosphoniumbasis gemäß Ansprüchen 1 bis 5 oder einer Schmiermittelzusammensetzung gemäß Ansprüchen 6 bis 11 bei dem Motor umfasst.

## Revendications

1. Liquide ionique à base de phosphonium de formule (I)
[CAT⁺][X⁻] (I)
dans lequel
[CAT⁺] est choisi parmi les cations de la formule (IA) 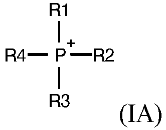 dans laquelle :
- R1, R2, R3 et R4 sont des groupes d'hydrocarbures linéaires ou ramifiés, saturés ou insaturés, comprenant de 1 à 12 atomes de carbone,
- au moins un des groupes R1, R2, R3 et R4 est choisi parmi les groupes alkyle ou alcényle linéaires ou ramifiés en C1-C3, et
- au moins deux des groupes R1, R2, R3, R4 sont indépendamment choisis parmi les groupes alkyle ou alcényle linéaires ou ramifiés en C8-C12 ; et
[X⁻] eprésente un contre-ion choisi parmi les composés de formule (IB) 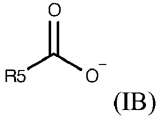 où R5 est choisi parmi les groupes alkyles et alcényles linéaires ou ramifiés comprenant de 5 à 7 atomes de carbone.

2. Liquide ionique à base de phosphonium selon la revendication 1, dans lequel dans la formule (IA)
- R1 est choisi parmi un groupe alkyle ou alcényle linéaire ou ramifié en C1-C3, de préférence un groupe alkyle, et
- R2, R3, R4 sont indépendamment choisis parmi les groupes alkyles ou alcényles linéaires ou ramifiés en C8-C12, de préférence les groupes alkyles.

3. Liquide ionique à base de phosphonium selon la revendication 2, dans lequel dans la formule (IA) R1 = -CH₃ ; et R2 = R3 = R4 = CH₃-(CH₂) ₚ-, avec p = 6-8.

4. Liquide ionique à base de phosphonium selon l'une des revendications 1 à 3, dans lequel [X-] représente le 2-éthylhexanoate.

5. Liquide ionique à base de phosphonium selon l'une des revendications 1 à 4, dans lequel [CAT+] est le tri-n-octyl méthylphosphonium et [X-] le 2-éthylhexanoate.

6. Composition lubrifiante comprenant
- de 30,0 à 99,95 % d'au moins une huile de base,
- de 0,05 à 15,0 % d'au moins un liquide ionique à base de phosphonium tel que défini dans les revendications 1 à 5,
les pourcentages étant définis en poids de composant par rapport au poids total de la composition.

7. Composition lubrifiante selon la revendication 6, dans laquelle elle comprend au moins un détergent choisi parmi les détergents neutres et surbasés, autre que le liquide ionique, ayant un indice de base total selon la norme ASTM D2896 de 20 à 450 mg KOH/g.

8. Composition lubrifiante selon la revendication 7, dans laquelle elle comprend de 1 à 35% en poids de détergents neutres et surbasés, autres que le liquide ionique, par rapport au poids total de la composition lubrifiante.

9. Composition lubrifiante selon l'une quelconque des revendications 6 à 8, dans laquelle le pourcentage en poids de liquide ionique à base de phosphonium par rapport au poids total de la composition lubrifiante est choisi de telle sorte que le BN apporté par le liquide ionique à base de phosphonium représente au moins 3 % du BN total de ladite composition lubrifiante.

10. Composition lubrifiante selon l'une quelconque des revendications 6 à 9, qui a une valeur de Total Base Number (TBN) selon ASTM D2896 supérieure à 5 mg KOH/g.

11. Composition lubrifiante selon l'une quelconque des revendications 6 à 10, qui présente une viscosité cinématique à 100°C supérieure ou égale à 5,6 mm²/s et inférieure ou égale à 21,9 mm²/s.

12. Utilisation du liquide ionique à base de phosphonium défini dans les revendications 1 à 5 comme détergent dans une composition lubrifiante, notamment un lubrifiant marin, pour réduire et/ou limiter et/ou empêcher et/ou retarder la formation de dépôts ou pour réduire les dépôts déjà présents dans les parties internes d'un moteur à combustion.

13. Utilisation du liquide ionique à base de phosphonium selon les revendications 1 à 5 comme additif anticorrosion dans une composition lubrifiante, notamment un lubrifiant marin, pour réduire et/ou éliminer et/ou retarder la corrosion dans les parties internes d'un moteur à combustion.

14. Procédé de lubrification d'un moteur marin à deux temps et de moteurs marins à quatre temps, ledit procédé comprenant l'application audit moteur marin du liquide ionique à base de phosphonium tel que défini dans les revendications 1 à 5 ou de la composition lubrifiante telle que définie dans les revendications 6 à 11.

15. Procédé pour réduire et/ou limiter et/ou empêcher et/ou retarder la formation de dépôts et/ou pour réduire les dépôts déjà présents dans les parties internes d'un moteur à combustion, dans lequel ledit procédé comprend au moins une étape d'application audit moteur d'un liquide ionique à base de phosphonium tel que défini dans les revendications 1 à 5 ou d'une composition lubrifiante telle que définie dans les revendications 6 à 11.
